(19) Europäisches Patentamt / European Patent Office / Office européen des brevets

(11) **EP 3 191 793 B1**

(12) **EUROPEAN PATENT SPECIFICATION**

(45) Date of publication and mention
of the grant of the patent:
**27.02.2019 Bulletin 2019/09**

(21) Application number: **15840941.7**

(22) Date of filing: **11.09.2015**

(51) Int Cl.:
*G01C 9/24* (2006.01)

(86) International application number:
**PCT/AU2015/000565**

(87) International publication number:
**WO 2016/037228 (17.03.2016 Gazette 2016/11)**

(54) **A DEVICE FOR MEASUREMENT OF DEVIATION FROM A REFERENCE AXIS**

VORRICHTUNG ZUR MESSUNG DER ABWEICHUNG VON EINER REFERENZACHSE

DISPOSITIF DE MESURE DE DÉVIATION PAR RAPPORT À UN AXE DE RÉFÉRENCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.09.2014 AU 2014903629
04.02.2015 US 201514614212
10.02.2015 AU 2015200640**

(43) Date of publication of application:
**19.07.2017 Bulletin 2017/29**

(73) Proprietors:
• **Arking Pty Ltd
East Brunswick, Victoria 3057 (AU)**
• **ZheJiang MGS Level Industry Co., Ltd
Jinhua Mountain Tourism Economic Zone,
Jinhua
Zhejiang 321000 (CN)**

(72) Inventor: **CARNIATO, Valerio
East Brunswick, Victoria 3057 (AU)**

(74) Representative: **Sun, Yiming
HUASUN Patent- und Rechtsanwälte
Friedrichstraße 33
80801 München (DE)**

(56) References cited:
WO-A1-2013/024275        DE-A1- 19 749 026
US-A- 1 187 548          US-A- 2 594 543
US-B2- 7 086 166         US-B2- 8 006 396
US-B2- 8 413 343

**Description**

**Field of the Invention**

The present invention relates to a device for measurement of deviation from a reference axis and in particular to a device for measurement of deviation from a vertical or horizontal reference axis.

The invention has been developed primarily for use with a levelling device such as a spirit level for measurement of deviation from a reference axis and will be described hereinafter with reference to this application. However, it will be appreciated that the invention is not limited to this particular field of use.

**Background of the Invention**

It is common in commercial and domestic buildings for owners to upgrade or alter various spaces and structures therein such as rooms, doors, windows and various fixtures, to address faults caused by movement of sub-assemblies or temperature or moisture, or even simply to provide a change of aesthetics or style of a room.

Upgrades such as door replacements, window replacements, wall replacements, and fixture replacements, such as shower screens and the like, require some building and construction skills. More often than not, when replacing a door or shower screen for example, walls adjacent to or support for a replacement fixture may not be plumb or have moved.

In such circumstances, it is not simply a matter of removing one element and replacing with another, because if a wall is out of 'plumb', replacing with an identical fixture may leave an unsightly misalignment between the replacement fixture and existing wall. It is not unusual for example, for tiled walls in a bathroom shower area to be installed out of 'plumb', hence when installing a door or glass plate or panel and the like to substantially align with an existing tiled wall, it is convenient to know the extent of deviation from 'plumb' so that a door or glass plate can be measured and tailored to mate with the tiled wall. However generally renovated bathrooms need to be first made "plumb" by replacement walls or by covering walls that will need to be aligned offset to the supporting structure.

One method traditionally used by builders to determine extent of deviation from 'plumb' uses a 'spirit level' having a bubble gauge comprising a transparent vial containing a coloured liquid such that an air bubble is created. In use:

- the spirit level is placed on a surface of vertical or horizontal structure, and inclination from plump or horizontal position is indicated by position of the air bubble relative to a central position on the transparent vial;

- material such as 'shim' of known dimension is wedged between the structure and the spirit level until the bubble is located centrally of the transparent vial; and

- the extent of deviation determined by the total thickness of shim required to obtain plumb or horizontal position.

The traditional approach to determining a measurement of deviation from plumb or horizontal is unwieldy and time consuming because multiple 'shims' may be required before level indication is achieved by centering the air bubble, and manual tilting of the spirit level is required for insertion of the shim(s), notwithstanding that depending on the insertion technique, the spirit level alignment may be compromised leading to incorrect readings.

In some instances surface levels may vary over a substantial distance hence such an approach often needs to be repeated along a length of structure. Even further, traditional techniques for measuring deviation can be very clumsy and impractical particularly when used in confined spaces such as bathrooms and shower recesses.

Some attempts have been made to address these drawbacks by providing devices having a form of deviation measure based on screw adjustment. Such devices require first placing an elongated member along a sloping surface, then manoeuvering an adjusting screw by rotating (screwing) against the surface thereby to push the elongated member away from the wall. In some instances a separate ruler such as a micrometer is used in a separate action to measure deviation after the adjusting screw is adjusted.

Generally in such attempts, the adjusting screw penetrates the surface during adjustment, and adjustment to effect a measurement reading requires two sets of hands. Therefore apart from damage to surfaces, such attempts represent a clear and practical disadvantage particularly where work is performed in confined spaces.

Other devices are designed to be altered before use and measured and locked into a predetermined angle. This type of device may require multiple fine adjustment operations before the correct angle is matched.

The present invention seeks to provide a device for measurement of deviation from a reference axis, which will overcome or substantially ameliorate at least one or more of the deficiencies of the prior art, or to at least provide an alternative.

It is to be understood that, if any prior art information is referred to herein, such reference does not constitute an admission that the information forms part of the common general knowledge in the art, in Australia or any other country.

## Summary of the Invention

According to a first aspect of the present invention, there is provided a device for measurement of deviation of a surface being assessed from a reference axis including all the features of claim 1.

The adjuster is formed by the connection of the deviation meter to the device body.

The present invention allows for easy and practical measurement of extent of deviation of a surface with respect to a reference axis in a single handed movement. This represents a very practical means of conducting deviation measurements in confined spaces.

The indicator on the device body for indicating alignment of the reference surface is a bubble level.

The adjuster connection can allow linear relative movement of the deviation body to the device body.

Alternatively the adjuster connection can allow arcuate relative movement of the deviation body to the device body.

The deviation meter connected to the device body to measure the extent of deviation from the reference axis includes a deviator disc movably mounted off centre on the body of the device to allow off-centre rotation of the deviator disc.

The reference point is on the deviator disc and engages surface being assessed.

The gauging means indicating the measure of the deviation of the reference point from the reference surface has a first part on the deviator disc and a second part on the body of the device.

A distance measurement scale forms at least the first or the second part of the gauging means and calibrated so that when the deviator disc rotates off-centre, the scale identifies deviation of the reference point from the reference axis.

It can be seen that the invention of a device for measurement of deviation from a reference axis provides the benefit of the user of the device able to make assessment of surfaces alignments possibly using only one hand and allowing quick adjustment that there can be a multitude of points that need to be assessed on a single wall or in a single room. The device of the present invention provides a substantial advantage in that it includes a ready adjuster to adjust the relative position of the reference surface of the device to the reference point of the deviation meter.

The device body can be held by the user and the adjuster allows adjustment of the reference point of the deviation meter to the device body while the reference surface of the device is aligning with the reference axis, and wherein the indicator on the device body for indicating alignment of the reference surface with the reference axis is a spirit level or bubble level indicator aligned with a longitudinal axis or the like.

The present invention addresses the drawbacks of the prior art by providing a device which allows a user holding the device body to effect movement of the adjuster formed by the connection of the deviation meter to the device body without handling the adjuster or the deviation meter.

The present invention includes a deviation meter connected to the device body to measure the extent of deviation from the reference axis by use of a deviator disc engaging the surface being assessed and defines the deviation of the reference point from the reference surface. In this way it is a soft contact that has no detrimental effects on the surface and overcomes the boring effects of screw means of the prior art.

The device body is able to be held by the user and the adjuster allows adjustment of the reference point of the deviation meter to the device body while the reference surface of the device is aligning parallel or orthogonal with the reference axis. In this way no secondary action is needed to obtain the adjustment. The alignment action effects the adjustment action. This represents a clear advance and advantage over the prior art devices.

The present invention allows for single handed adjustment without touching the adjuster. In particular the user holding the device body can effect movement of the adjuster formed by the connection of the deviation meter to the device body without handling the adjuster or the deviation meter by protruding the deviation body from the device body such that a reference point on the deviation body can engage a surface being assessed and adjust the protrusion of the deviation body by further pressing deviation body against surface being assessed until indicator indicates aligned parallel or orthogonal with the longitudinal axis and effecting the measurement on the gauging means in the same action.

Other aspects of the invention are also disclosed.

## Brief Description of the Drawings

Notwithstanding any other forms which may fall within the scope of the present invention, a preferred embodiment / preferred embodiments of the invention will now be described, by way of example only, with reference to the accompanying drawings in which:

Figure 1A is first embodiment of a device for measurement of deviation from a reference axis in accordance with a preferred embodiment of the present invention;

Figure 2 is a second embodiment of a device for measurement of deviation from a reference axis in accordance with another preferred embodiment of the present invention;

Figure 3 is an illustrated detail of the gauging means of the device of Figure 1B;

Figure 4 is illustrated diagrammatic view of a plurality of devices at various stages of extension of the deviator in order to assist in the explanation of use;

Figure 5 and 6 show various graduated scales of the gauging means together with a pointing indicator that can be mounted thereon;

Figure 7 is a diagrammatic side view and top view of the operation of a directly mechanically linked gauging means to the deviator; and

Figures 8 and 9 are a further diagrammatic side view and top view of the operation of a further directly mechanically linked gauging means to the deviator.

Figures 10a to 10d are a diagrammatic side view, top plan view, and respective end views of a device for measurement of deviation from a reference axis in accordance with a further preferred embodiment of the present invention;

Figures 11a and 11b are diagrammatic top plan views of the device in figure 10 showing measurement determination;

Figures 12a and 12b are diagrammatic top plan view and side view of a device for measurement of deviation from a reference axis in accordance with a further preferred embodiment of the present invention;

Figures 13a and 13g are a diagrammatic side views of a deviation measurement device for measurement of deviation from a reference axis in accordance with a further preferred embodiment of the present invention showing extension and retraction features;

Figures 14a to 14d are a diagrammatic are diagrammatic top plan views of the device in figure 13 showing measurement determination;;

Figures 15a and 15b are a diagrammatic end views of a device in figure 13 for measurement of deviation from a reference axis in accordance with a further preferred embodiment of the present invention.

## Description of Preferred Embodiments

It should be noted in the following description that like or the same reference numerals in different embodiments denote the same or similar features.

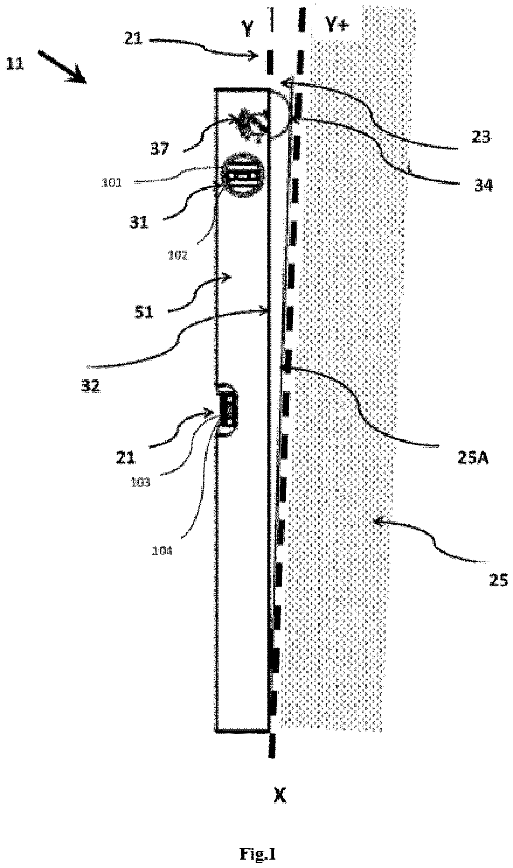

Referring to the drawings and particularly figure 1 there is shown a device 11 for measurement of deviation from a reference axis. The device 11 for measurement of deviation from a reference axis X-Y which forms a vertical plumb line 21.

The device 11 includes a body 51 having means of determining one of a pre-selected reference axes. In figure 1 there is shown a reference axis indicator 31 comprising a bubble leveler 101 extending across the width of the body and orthogonal to the longitudinal reference surface 32. When the bubble 102 of the bubble leveler 101 is centrally located of the bubble leveler, then the reference surface 32 of the device 11 is aligned with the reference axis X-Y which forms a vertical plumb line 21.

The device 11 includes a means of determining one of a pre-selected reference axes. In figure 1 there is also shown a reference axis indicator 21 comprising a bubble leveler 103 extending along the length of the device body 51 and parallel to the longitudinal reference surface 32. When the bubble 104 of the bubble leveler 103 is centrally located then the reference surface 32 is aligned with the reference axis X-Y.

Therefore the device can be used to determine an alignment in the X axis and in the Z axis (not shown). Similarly the device can be used to determine alignment in the Y axis. By relative arrangements of the reference axis indicator 31 and the reference surface 32 concordance with various reference axes can be determined.

Therefore the device includes a reference surface which can be aligned with a preselected reference axis and an indicator for indicating alignment with that reference axis.

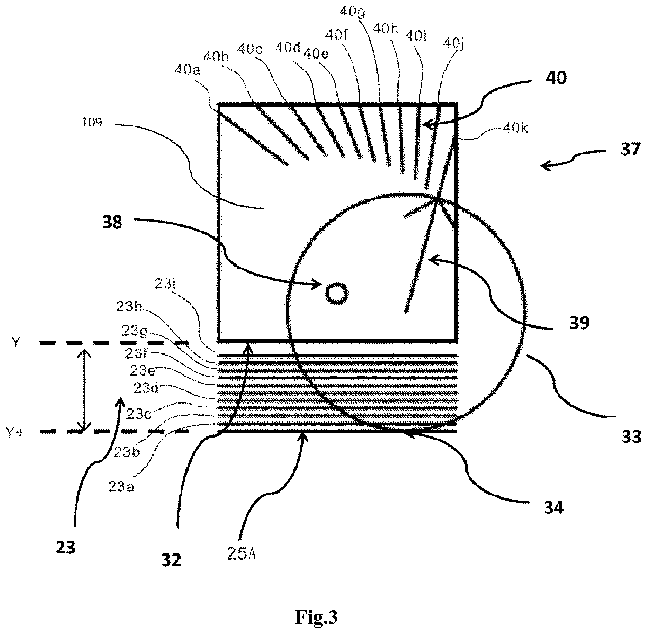

The device 11 further includes a deviation meter 37. In one embodiment as shown in figure 3, the deviation meter 37 includes a deviation body 33 to measure the extent of deviation 23 of the surface 25A being measured such as a wall 25 (see figure 1) extending from axis X to Y+, from the reference axis X to Y which in figure 1 is the vertical plumb line 21. Therefore the deviation 23 comprises the distance of Y to Y+ at single point along the longitudinal length of the device 11.

The deviation meter 37 (in figure 3) of the device 11 includes a reference point 34 and a gauging means 40 of the body 51 indicating the measure of the deviation of the reference point 34 from the reference surface 32. This therefore provides the user with an amount of deviation of the wall 25 to the vertical plumb line 21. From such measurements using the device to determine deviation is within acceptable practice or whether a false wall needs to be mounted and the deviation will provide the reference point for creating a plumb false wall or providing an indication of the padding needed to create the vertical plumb finish.

It is important though that the user of the device is able to make such measurements possibly using only one hand and allowing quick adjustment that there can be a multitude of points that need to be assessed on a single wall or in a single room. The device of the present invention provides a substantial advantage in that it includes a ready adjuster connection to adjust the relative position of the reference surface of the device to the reference point 34 of the deviation meter 37.

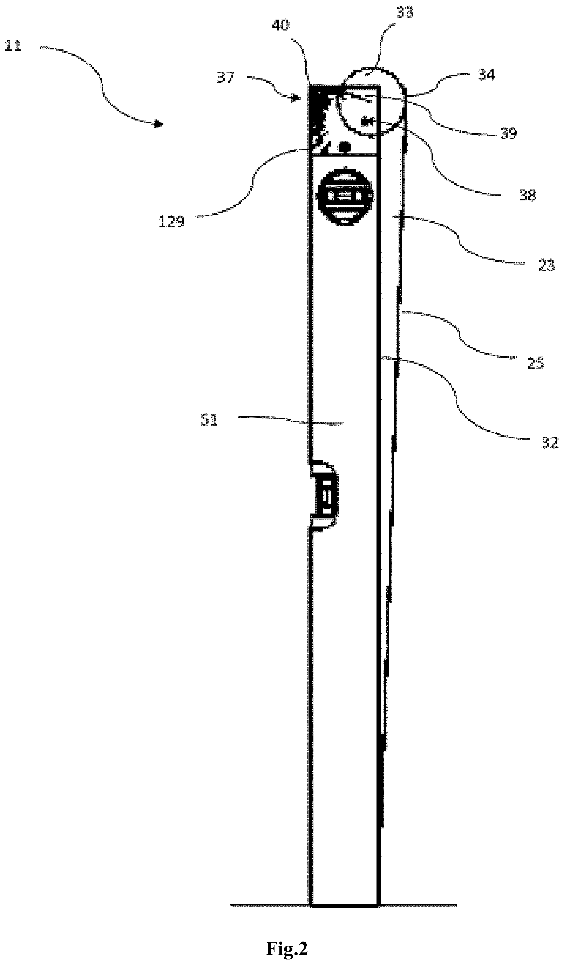

The device 11 therefore includes an adjuster connection 38 to adjust the relative position of the reference point 34 of the deviation body 33 to the reference surface 32 of the device. In figure 2, the adjuster connection is formed by the connection of the deviation meter 37 to the device body 51 by a pivot connection such that the user holding the device body 51 can manipulate the deviation body 33 of the deviator meter by the adjuster connection without handling the adjuster connection. Thereby deviation measurement can be achieved by manual deflection using one hand holding the device body 51.

The reference point 34 is located on a deviation body 33 which in the embodiment in figures 2 and 3 is a round disk that is mounted off-centre onto the body 51 of the level device 11. In one embodiment (best seen in figure 3) the deviator 33 can be interconnected to the body 51 by an intermediate spacer 109. This is particularly useful when retrofitting a deviation meter 37. In this case, the spacer 109 can include a gauging means in the form of a scale 40 of the spacer.

As shown in figure 3, there is a relationship between the extent of deviation 23a to 23i from the reference surface 32 to the reference axis, and the scale of the gauging means 40. As shown, for each increment 23a to 23i, the scale 40 provides a deviation measurement indicated by pointer 39 across scale 40a to 40k.

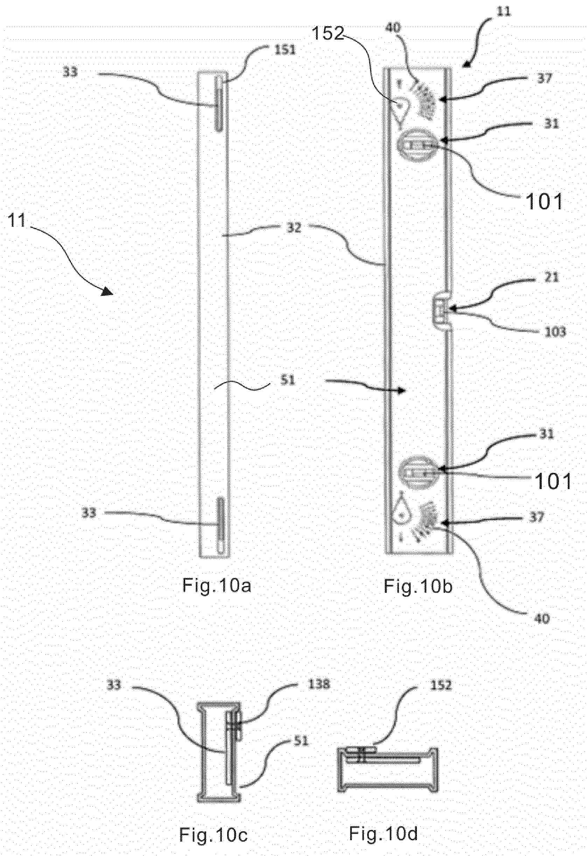

In an alternative embodiment (best seen in figure 10a), the body 51 of the device 11 is modified to provide an internal housing 151 for receiving the disc 33 so that the disc is movable between a storage condition within the housing of the body and an operating condition. In figures 1 and 3, the deviator disc 33 is frictionally mounted on the body 51 so that the disc is retained in relative position to the longitudinal body of the level device 11 until a moderate force is applied by the hand of the user in pressing against the wall 25. In this way the user can locate the level device 11 in an approximate vertical position with the deviator disk 33 substantially extended and push against the wall so that the disk being mounted off-centre by the adjuster connection 38 will retract back towards the body of the level device 11 and the reference surface 32 of the level device will come closer to the reference axis 21 as shown by the bubble centralising in the reference axis indicator 31.

The resulting amount of deviation 23 (see figure 3) of the reference point 34 from the reference surface 32 when aligned with the reference axis 21 can be indicated on a gauging means 40 of the deviation meter 37. This gauging means 40 in figures 1 to 3 is directly mechanically linked with the deviator 33 by the adjuster connection 38 such that a scale of positions is indicated by an indicator 39 that is mechanically connected to the deviator 33.

Clearly though the deviator 33 and gauging means 40 of the deviation meter 37 could also be indirectly linked and uses such as sensors and digital indicators can provide the indication of scale opposition of the reference point 34 from the reference surface 32.

In figure 2 there is shown an alternative device 11 having a reference surface 32 and a deviation meter 37 for determining extent of deviation 23 of a wall 25 from plumb 21. In this embodiment, the deviator 33 is shown in a position on the gauging means 40 indicating maximum deviation 23.

In this embodiment, the deviation meter 37 comprises a surface portion 129 of the body 51, and an offset deviator disk 33 frictionally mounted to the surface portion 129. The surface portion 129 includes a scale 40, and the deviator disc 33 includes an indicator 39 in the form of an arrow pointer, wherein the extent of deviation is determined by contact between reference point 34 of the disc 33 and wall 25, and cooperation between the indicator arrow 39 and scale 40 such that indicator 39 on the offset mounted deviator disk 33 indicates the amount of deviation 23 of the reference point 34 from the reference surface 32 of the level device 11 on the scale 40.

Referring to figure 3 there is shown a deviation meter 37 in close up view substantially corresponding to figure 2. In this embodiment the deviation meter 37 includes an intermediate spacer 109 having a scale 40, and a deviator disc 33 mounted to the intermediate spacer by adjuster connection 38 offset from the centre of the deviator disc 33. The deviator disc 33 includes an indicator pointer arrow 39 that interacts with the scale 40 on the spacer 109 to indicate the amount of deviation 23 of the reference point 34 from the reference surface 32 of the device 11. This is achieved because the deviator disc 33 is mounted to the device body at point 38 offset from the centre of the deviator disc 33 by the adjuster connection 38.

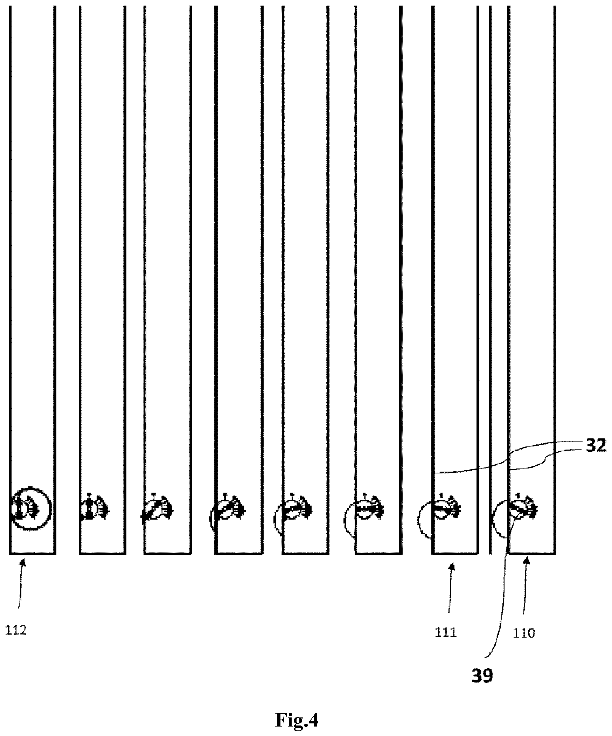

By way of illustration, a plurality of deviations 23 are shown in figure 4 with the reference point 34 being shown at the greatest deviation 23 at 110. At this position the indicator arrow 39 is also at the greatest value on the scale 40 of the deviation meter 37. By the deviator disk 33 being pushed back towards the reference surface 32, the next deviation 23 will be shown by the next scale 40 at 111. Due to rotation of the disk 33 around the adjuster connection offset mount 38, the scale 40 magnifies the deviation 23 to allow ready determination of the actual deviation. Each one of these deviations is shown illustratively clearly in figure 3 where the maximum deviation 110 is shown on the right-hand side of figure 3 with the zero deviation 112 shown on the extreme left hand side.

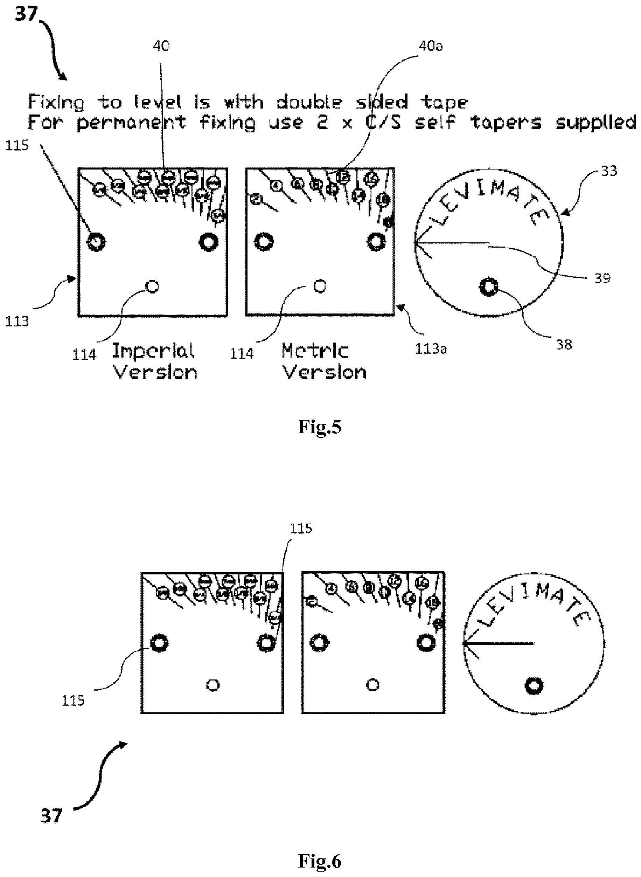

In figures 5 and 6 there is shown alternative deviation meters 37 comprising a first intermediate spacer 113 or 113a for mounting on a surface of a device body 51, the spacers showing imperial and metric measurement scales 40 and 40a respectively. The deviation meters each include a second disc 33 including an indicator arrow 39 and a mount fixture 38 for frictional attachment to mating mount 114 by a fixing means (not shown). The fixing means in figures 5 and 6 further include attachment points 115 which can comprise double sided adhesive tape or the like for attachment to a portion of the body 51.

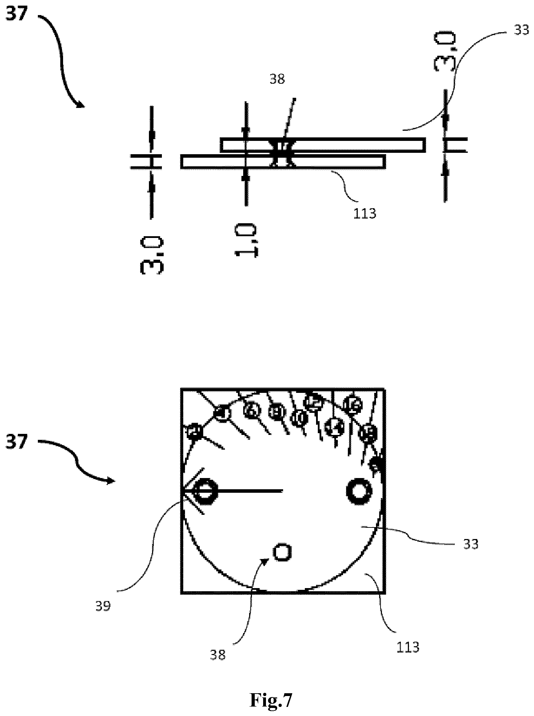

Figure 7 shows a deviation meter 37 according to figures 5 and 6 in an assembled form. In particular, there is shown a first spacer 113 which is adapted for attachment to a body portion of a level device or the like, and a disc 33 mounted on spacer 113 at mount point 38 offset from the centre of the disc by an adjuster connection so that the disc can be movable in relation to the spacer. The disc 33 includes an indicator arrow 39 and a reference surface, and the substrate 113 includes a scale 40. In use the disc 33 is movable about the mount 38 and when a reference surface of the disc 33 contacts a wall surface, the indicator arrow points to a portion of the scale 40 so that measurement of deviation 23 can be determined directly from the scale.

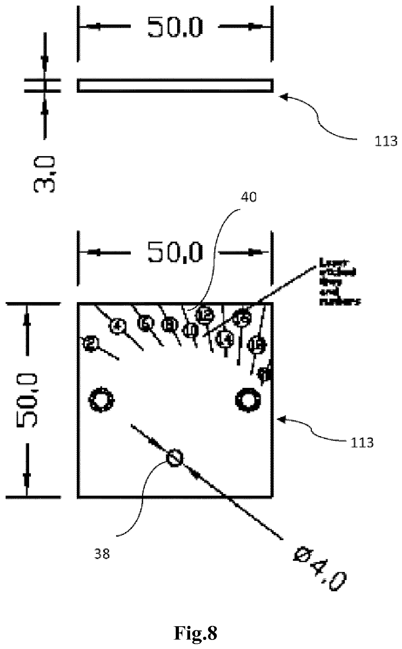

Figure 8 shows side elevation and top plan view of the spacer 113 in figures 5 to 7. In this embodiment the spacer 113 has a substantially square geometry and includes a scale 40. A mounting point 38 is shown centrally located closest to one side of the spacer. The spacer 113 also includes attachment points 115 so that the spacer can be attached fixedly or releasably on a body portion of the level device (not shown).

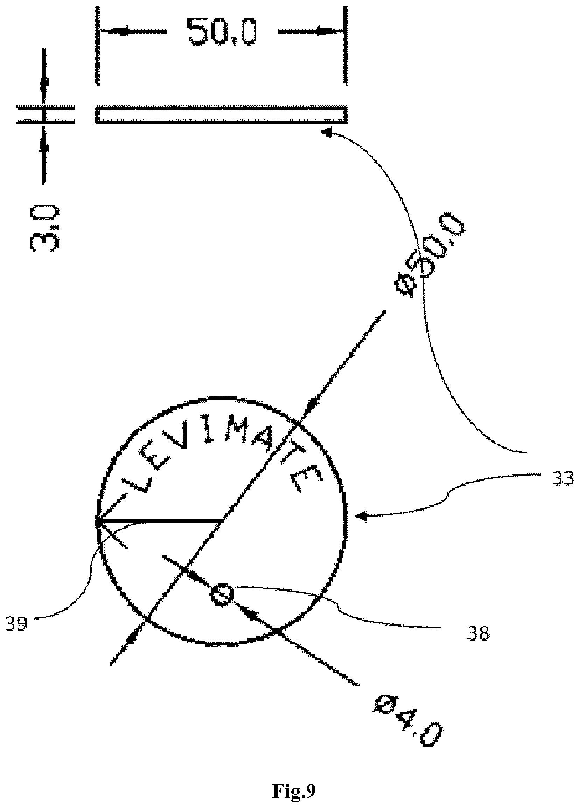

As shown in figure 9, the deviator disc 33 is substantially circular and includes an indicator arrow 39 and a mount 38 which is offset from the centre of the disc 33 and coincides with mount 38 of the substrate 113 so that in a mounted condition the disc 33 is movable about the offset mount position so that the indicator arrow can be coordinated with the scale 40 on the substrate to provide a measure of deviation 23.

In use the method for measurement of deviation from a reference axis including the steps of: providing a device body having a means with an indicator on the device body for indicating alignment of a reference surface of the device body with the reference axis and providing a deviation body of a deviation meter mounted in relative movable position to the device body; protruding the deviation body from the device body such that a reference point on the deviation body can engage a surface being assessed; adjusting the protrusion of the deviation body and the reference point by engaging the surface being assessed; and reading a gauging means indicating the measure of the deviation of the reference point from the reference surface when the adjustment of the protrusion with the reference point engaging the surface being assessed is moved sufficiently that the indicator on the device body indicates alignment of the reference surface of the device body with the reference axis.

Referring to figures 10a to 10d there is shown various views of a device 11 for measurement of deviation from a reference axis. In figure 10b (top plan view), there is the vertical reference axis indicator 31 comprising a bubble leveler 101 extending across the width of the device and orthogonal to the longitudinal reference surface 32. When the bubble of the bubble leveler 101 is centrally located then the reference surface 32 of the device is aligned with the vertical reference axis X-Y (refer figure 1). The device 11 also includes a horizontal reference axis indicator 21 comprising a bubble leveler 103 extending along the length of the device and parallel to the longitudinal reference surface 32.

The device 11 further includes a deviation meter 37 including a deviation body 33, and a gauging means 40 to measure the extent of deviation of a surface 25A (refer figure 1) being measured such as a wall 25 extending from axis X to Y+, from the reference axis X to Y which in this case is the vertical plumb line 21 (in figure 1). Therefore the deviation 23 comprises the distance of Y to Y+ at single point along the longitudinal length of the device 11. And it is understood that for determining deviation on distances larger than the device in use, the overall deviation for areas longer than the device can be calculated based on formula 1 below:

$$\text{Lo (length of object)/Ld (length of device) x Dm (deviation measurement).}$$

The deviation meter 37 includes a reference point 34 on the deviation body 33 and a gauging means 40 cooperating therewith indicating the measure of the deviation of the reference point 34 from the reference surface 32. In this embodiment, the deviator disc 33 is movably received within a housing 151 of the device body 51, and the deviator meter 37 includes a teardrop-shaped indicator 152 mounted on the body and interconnected to the disc 33 by an adjustor connection 138 at offset mount point so that the indicator 152 is movable relative to the gauging means 40 with movement of the disc 33 relative to the housing 151. As shown in figures 10a and 10b, the device body includes a deviation meter at opposite ends, and in one embodiment the disc 33 can be moved between a storage condition and an operating condition.

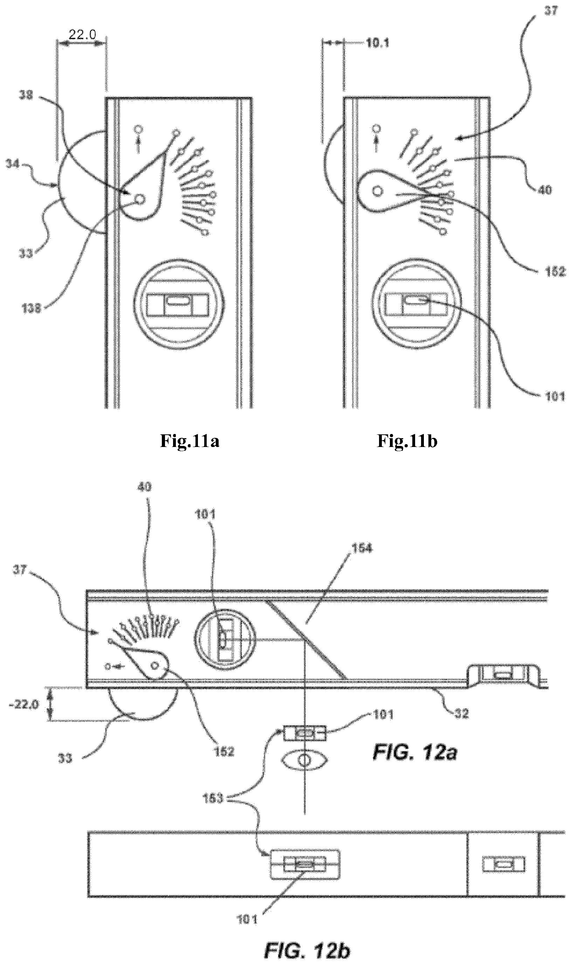

In an operating condition as shown in figures 11a and 11b, the disc 33 (refer figure 11a) is removed from the housing 151 a first distance as indicated by indicator 152 on the scale of the gauging means 40, and thereafter the device body is adjusted in a single handed deflection until bubble indicator 101 and/or 101b is centred, during which period the adjuster connection 138 allows movement of the indicator 152 over scale 40. Once the bubble is centred, the indicator 152 of the deviator meter points to deviation measurement scale on the gauging means and can be directly read.

This therefore provides the user with an amount of deviation of the wall 25 to the vertical plumb line 21. From such measurements using the device to determine deviation is within acceptable practice or whether a false wall needs to be mounted and the deviation will provide the reference point for creating a plumb false wall or providing an indication of the padding needed to create the vertical plumb finish.

In a further embodiment with reference to figures 12a and 12b, there is shown a device for measurement of deviation of a surface being assessed from a reference axis including a viewing window 153 on an opposing surface to the reference surface 32 disposed at an angle to the bubble indicator 101 for allowing a user to view the indicator bubble from different angles to the usual viewing angle. The viewing window is internal of the device body 51 and located above or below the level of the indicator bubble 101 such that viewing through the window allows viewing of the indicator.

In figure 12a, the viewing widow includes a reflector 154 allowing viewing of the indicator bubble 101 from a first angle to a second angle. In a further embodiment (not shown) the viewing window is an internal channel to the indicator.

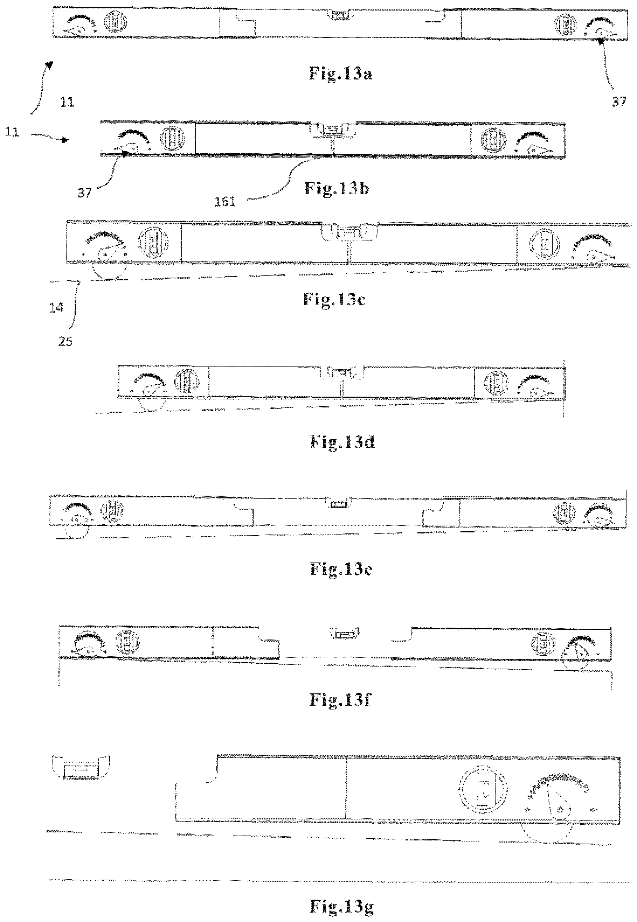

Now referring to figures 13a and 13g, there is shown a slidably adjustable level device 11 having an adjustable body 51 to allow adjusting the length of the device body, and dual deviation meters 37 on either end of the device body. The series of figures shows a device body 51 adjustable about a centre location 161 extending between a closed condition in 13b sufficiently to allow deviation measurement over an expansive section of a wall 25.

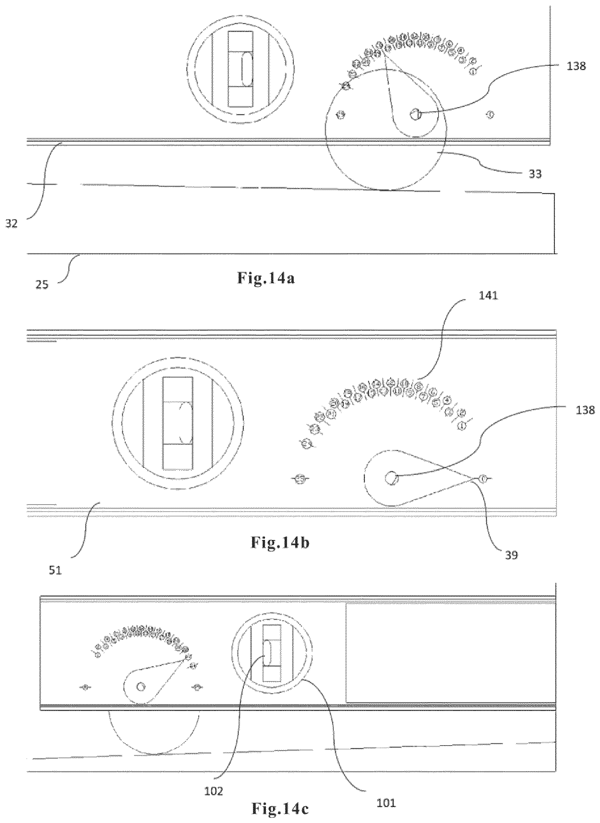

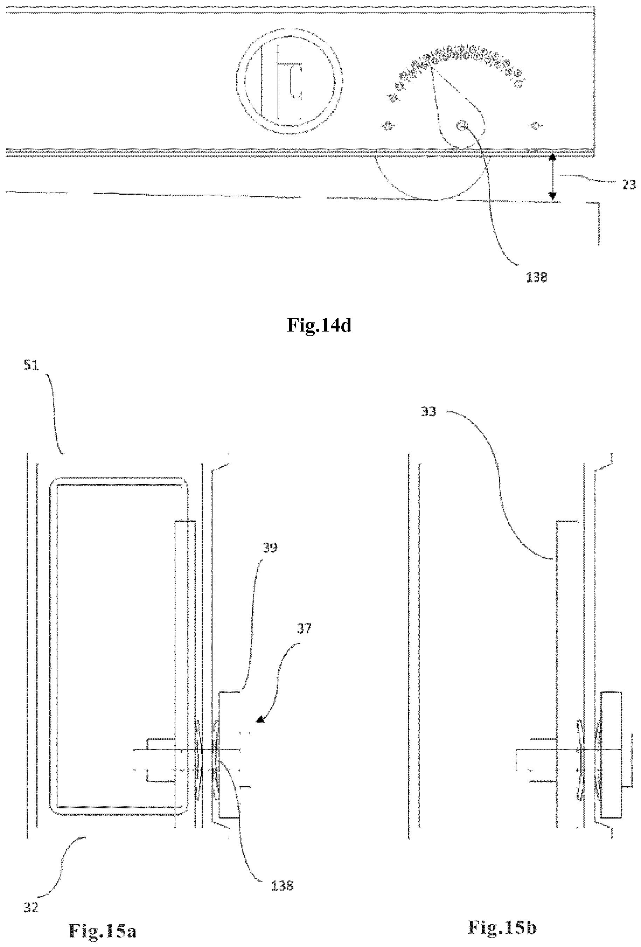

Referring to figures 14a to 14d there is shown a variety of gauging means 40 having different scales or combinations of scales 141 on the device body 51, and showing the movement of a pointer 39 relative to the scale in cooperation with a deviation body 33 via and adjuster connection 138, which is located off-set from the centre of the deviation body so that the pointer 39 moves across the scale as the deviation body extends or retracts relative to the device body. As can be seen, the extent of deviation 23 from a wall 25 is taken when the device reference surface 32 is aligned with a reference axis indicated when the bubble 102 of the indicator 101 is centrally located. In one embodiment the scales include both imperial and metric measures.

Referring to figures 15a and 15b there is shown end view of the device in cross-section in accordance with a further embodiment including a device body 51, a reference surface 32, and deviation meter 37. The deviation meter 37 includes a deviation body 33 movably mounted within the device body 51, and a pointer arm 39 interconnected by an adjuster connection 38 offset from the centre of the deviation body such that the deviation body 33 and the pointer arm 39 cooperate to allow movement of the pointer arm across a scale (not shown) as the deviation body is deflected relative to the device body. In figure 15a there is also shown a sleeve arrangement in which an outer body can be slidably moved relative to an inner body.

Benefits of the invention include the following:

    a) The device of the present invention provides for a single action,
    b) The device of the present invention can be operated by a single hand hence easy to use in confined spaces,
    c) The device of the present invention allows push to touch reference surface with a wall (for example) or other surface, so no damage to the surface,
    d) Push to touch hence easy handling of the device body in a single action,
    e) Offset deviation body so expansive gauging of displacement difference, and
    f) Visual determination of level through a window so no need to remove the device body from reference surface

**Interpretation**

Embodiments:

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may.

Similarly it should be appreciated that in the above description of example embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Detailed Description of Specific Embodiments are hereby expressly incorporated into this Detailed Description of Specific Embodiments, with each claim standing on its own as a separate embodiment of this invention.

Different Instances of Objects

As used herein, unless otherwise specified the use of the ordinal adjectives "first", "second", "third", etc., to describe a common object, merely indicate that different instances of like objects are being referred to, and are not intended to imply that the objects so described must be in a given sequence, either temporally, spatially, in ranking, or in any other manner.

Specific Details

In the description provided herein, numerous specific details are set forth. However, it is understood that embodiments of the invention may be practiced without these specific details. In other instances, well-known methods, structures and techniques have not been shown in detail in order not to obscure an understanding of this description.

Terminology

In describing the preferred embodiment of the invention illustrated in the drawings, specific terminology will be resorted to for the sake of clarity. However, the invention is not intended to be limited to the specific terms so selected, and it is to be understood that each specific term includes all technical equivalents which operate in a similar manner to accomplish a similar technical purpose. Terms such as "forward", "rearward", "radially", "peripherally", "upwardly", "downwardly", and the like are used as words of convenience to provide reference points and are not to be construed as limiting terms.

Comprising and Including

In the claims which follow and in the preceding description of the invention, except where the context requires otherwise due to express language or necessary implication, the word "comprise" or variations such as "comprises" or "comprising" are used in an inclusive sense, i.e. to specify the presence of the stated features but not to preclude the presence or addition of further features in various embodiments of the invention.
Any one of the terms: including or which includes or that includes as used herein is also an open term that also means including at least the elements/features that follow the term, but not excluding others. Thus, including is synonymous with and means comprising.

Scope of Invention

**Industrial Applicability**

It is apparent from the above, that the arrangements described are applicable to the building and tools industries.

**Claims**

1.  A device (11) for measurement of deviation of a surface (25) being assessed from a reference axis (21) including:

    a device body (51) having a means for determining a pre-selected reference axis, the means including: a reference surface (32) of the device body which is configured to be aligned with the reference axis, and the reference surface being aligned with a longitudinal axis of the device body; and
    an indicator (31) on the device body for indicating alignment of the reference surface with the reference axis; wherein the indicator includes a bubble level indicator (101, 103) aligned parallel or orthogonal with the longitudinal axis;
    **characterized in that** the device for measurement includes:

a deviation meter (37) connected to the device body to measure an extent of deviation from the reference axis, wherein the deviation meter includes:

a reference point (34) for engaging the surface being assessed; and
a gauging means (40) configured to indicate the measure of the deviation of the reference point from the reference surface;

including an adjuster (38) to adjust the relative position of the reference point of the deviation meter to the reference surface formed by the deviation meter being connected to the device body to measure the extent of deviation from the reference axis, wherein the device body is configured to be held by a user and the adjuster is configured to allow adjustment of the reference point to the device body while the reference surface of the device is aligning parallel or orthogonal with the reference axis;
the deviation meter including a deviator disc (33) movably mounted off-centre on the device body to allow off-centre rotation of the deviator disc such that at any measurement of deviation the reference point is the contact of the outer edge of the deviator disc engaging the surface being assessed and defines the deviation of the reference point from the reference surface wherein the gauging means has a first part (39) on the deviator disc and a second part (40) on the device body and a distance measurement scale forming at least the first part (39) or the second part (40) of the gauging means and calibrated so that when the deviator disc rotates off-centre, the scale identifies deviation of the reference point from the reference axis,

wherein the device is configured such that the user holding the device body can effect movement of the adjuster formed by the connection of the deviation meter to the device body without handling the adjuster or the deviation meter by protruding the deviator disc from the device body such that the reference point on the deviator disc can engage a surface being assessed and adjust the protrusion of the deviator disc by further pressing the deviator disc against the surface being assessed until the indicator indicates alignment of the reference surface with the reference axis and effecting the measurement on the gauging means in the same action.

2. A device for measurement of deviation from a reference axis according to claim 1 wherein the indicator (31) on the device body for indicating alignment of the reference surface with the reference axis includes a second bubble level indicator (101) extending across the device and orthogonal to the longitudinal axis.

3. A device for measurement of deviation from a reference axis according to claim 1 wherein the adjuster connection is configured to allow linear relative movement of the deviator disc to the device body.

4. A device for measurement of deviation from a reference axis according to claim 1 wherein the adjuster is configured to allow arcuate relative movement of the deviator disc to the device body.

5. A device for measurement of deviation of a surface being assessed from a reference axis according to claim 1 wherein:

the indicator includes a bubble level indicator (103) aligned with the longitudinal axis;
a viewing window (153) on an opposing surface to the reference surface is disposed at an angle to the indicator for allowing the user to view the indicator from different angles to the usual viewing angle.

6. A device for measurement of deviation of a surface being assessed from a reference axis according to claim 5, wherein the viewing window (153) includes a reflector (154) allowing viewing of the indicator from a first angle to a second angle.

7. A device for measurement of deviation of a surface being assessed from a reference axis according to claim 5, wherein the viewing window extends internal of the device body and is located above or below the level of the indicator such that viewing through the window allows viewing of the indicator.

8. A device for measurement of deviation of a surface being assessed from a reference axis according to claim 5, wherein the viewing window includes an internal channel to the indicator.

**Patentansprüche**

1. Vorrichtung (11) zum Messen der Abweichung einer Oberfläche (25), die von einer Referenzachse (21) aus beurteilt wird, einschließlich:

einen Vorrichtungskörper (51) mit einer Einrichtung zum Bestimmen einer vorgewählten Referenzachse, wobei die Einrichtung umfasst: eine Referenzfläche (32) des Vorrichtungskörpers, die zum Ausrichten auf die Referenzachse ausgelegt ist, und wobei die Referenzfläche zum Ausrichten auf eine Längsachse des Vorrichtungskörpers ausgerichtet ist; und

eine Anzeige (31) am Vorrichtungskörper, um die Ausrichtung der Referenzfläche mit der Referenzachse anzuzeigen;

wobei die Anzeige eine Wasserwaage (101, 103) beinhaltet, die parallel oder orthogonal zur Längsachse ausgerichtet ist;

**dadurch gekennzeichnet, dass** die Vorrichtung zum Messen Folgendes beinhaltet:

einen Abweichungsmesser (37), der mit dem Vorrichtungskörper verbunden ist, um ein Ausmaß der Abweichung von der Referenzachse zu messen, wobei der Abweichungsmesser Folgendes beinhaltet:

einen Referenzpunkt (34) zum Erfassen der zu bewertenden Oberfläche; und

eine Messeinrichtung (40), die zum Anzeigen des Maßes der Abweichung des Referenzpunkts von der Referenzfläche ausgelegt ist;

beinhaltend einen Einsteller (38) zum Einstellen der relativen Position des Referenzpunkts des Abweichungsmessers zu der Referenzfläche, die durch den mit dem Vorrichtungskörper verbundenen Abweichungsmesser gebildet wird, um das Ausmaß der Abweichung von der Referenzachse zu messen, wobei der Vorrichtungskörper zum Halten durch einen Benutzer ausgelegt ist und der Einsteller zum Gestatten einer Einstellung des Referenzpunkts zu dem Vorrichtungskörper ausgelegt ist, während die Referenzfläche der Vorrichtung parallel oder orthogonal zu der Referenzachse ausgerichtet ist;

wobei der Abweichungsmesser eine Abweichungsscheibe (33) beinhaltet, die beweglich außermittig am Vorrichtungskörper montiert ist, um eine außermittige Rotation der Abweichungsscheibe zu ermöglichen, so dass bei jeder Abweichungsmessung der Referenzpunkt der Kontakt der Außenkante der Abweichungsscheibe ist, die die zu beurteilende Oberfläche erfasst und die Abweichung des Referenzpunkts von der Referenzfläche definiert, wobei die Messeinrichtung einen ersten Teil (39) auf der Abweichungsscheibe und einen zweiten Teil (40) auf dem Vorrichtungskörper und eine Entfernungsmessskala aufweist, die mindestens den ersten Teil (39) oder den zweiten Teil (40) der Messeinrichtung bildet und so kalibriert ist, dass wenn sich die Abweichungsscheibe außermittig dreht, die Skala die Abweichung des Referenzpunktes von der Referenzachse identifiziert, wobei die Vorrichtung so ausgelegt ist, dass der Benutzer, der den Vorrichtungskörper hält, eine Bewegung des durch die Verbindung des Abweichungsmessers mit dem Vorrichtungskörper gebildeten Einstellers bewirken kann, ohne den Einsteller oder den Abweichungsmesser zu handhaben, indem er die Abweichungsscheibe aus dem Vorrichtungskörper herausragt, so dass der Referenzpunkt auf der Abweichungsscheibe eine zu bewertende Oberfläche erfassen kann und das Herausragen der Abweichungsscheibe durch weiteres Drücken der Abweichungsscheibe gegen die zu bewertende Oberfläche einstellen kann, bis die Anzeige die Ausrichtung der Referenzfläche mit der Referenzachse anzeigt und die Messung an den Messeinrichtungen in derselben Handlung bewirkt.

2. Vorrichtung zum Messen der Abweichung von einer Referenzachse nach Anspruch 1, wobei die Anzeige (31) am Vorrichtungskörper zum Anzeigen der Ausrichtung der Referenzfläche mit der Referenzachse eine zweite Wasserwaage (101) beinhaltet, die sich über die Vorrichtung erstreckt und orthogonal zur Längsachse verläuft.

3. Vorrichtung zum Messen der Abweichung von einer Referenzachse nach Anspruch 1, wobei die Einstellerverbindung zum Gestatten einer linearen Relativbewegung der Abweichungsscheibe zum Vorrichtungskörper ausgelegt ist.

4. Vorrichtung zum Messen der Abweichung von einer Referenzachse nach Anspruch 1, wobei der Einsteller zum Gestatten einer bogenförmigen Relativbewegung der Abweichungsscheibe zum Vorrichtungskörper ausgelegt ist.

5. Vorrichtung zum Messen der Abweichung einer Oberfläche, die von einer Referenzachse beurteilt wird nach Anspruch 1, wobei:

die Anzeige eine Wasserwaage (103) beinhaltet, die mit der Längsachse ausgerichtet ist;
ein Sichtfenster (153) auf einer der Referenzfläche gegenüberliegenden Oberfläche unter einem Winkel zur Anzeige angeordnet ist, so dass der Benutzer die Anzeige aus verschiedenen Winkeln und mit dem üblichen Sichtwinkel betrachten kann.

6.  Vorrichtung zum Messen der Abweichung einer Oberfläche, die von einer Referenzachse beurteilt wird nach Anspruch 5, wobei das Sichtfenster (153) einen Reflektor (154) beinhaltet, der es ermöglicht, die Anzeige aus einem ersten Winkel zu einem zweiten Winkel zu betrachten.

7.  Vorrichtung zum Messen der Abweichung einer Oberfläche, die von einer Referenzachse beurteilt wird nach Anspruch 5, wobei sich das Sichtfenster innerhalb des Vorrichtungskörpers erstreckt und sich oberhalb oder unterhalb des Niveaus der Anzeige befindet, so dass das Betrachten durch das Fenster das Betrachten der Anzeige ermöglicht.

8.  Vorrichtung zum Messen der Abweichung einer Oberfläche, die von einer Referenzachse nach Anspruch 5 beurteilt wird, wobei das Sichtfenster einen internen Kanal zur Anzeige beinhaltet.

**Revendications**

1.  Dispositif (11) de mesure d'une déviation d'une surface (25) qui est évaluée par rapport à un axe de référence (21) comportant :

    un corps de dispositif (51) ayant un moyen pour déterminer un axe de référence présélectionné, le moyen comportant : une surface de référence (32) du corps de dispositif qui est configurée pour être alignée avec l'axe de référence, et la surface de référence étant alignée avec un axe longitudinal du corps de dispositif ; et
    un indicateur (31) sur le corps de dispositif pour indiquer un alignement de la surface de référence avec l'axe de référence ;
    dans lequel l'indicateur comporte un indicateur de niveau à bulle (101, 103) aligné parallèlement ou orthogonalement à l'axe longitudinal ;
    **caractérisé en ce que** le dispositif de mesure comporte :

    un dispositif de mesure de déviation (37) lié au corps de dispositif pour mesurer une amplitude de déviation par rapport à l'axe de référence, le dispositif de mesure de déviation comportant :

    un point de référence (34) destiné à entrer en prise avec la surface qui est évaluée ; et
    un moyen de calibrage (40) configuré pour indiquer la mesure de la déviation du point de référence par rapport à la surface de référence ;

    comportant un dispositif d'ajustement (38) pour ajuster la position relative du point de référence du dispositif de mesure de déviation par rapport à la surface de référence formée par le dispositif de mesure de déviation qui est lié au corps de dispositif pour mesurer l'amplitude de déviation par rapport à l'axe de référence, le corps de dispositif étant configuré pour être maintenu par un utilisateur et le dispositif d'ajustement étant configuré pour permettre un ajustement du point de référence par rapport au corps de dispositif pendant que la surface de référence du dispositif s'aligne parallèlement ou orthogonalement à l'axe de référence ; le dispositif de mesure de déviation comportant un disque déviateur (33) monté de façon mobile et excentrée sur le corps de dispositif pour permettre une rotation excentrée du disque déviateur de telle sorte que, pour toute mesure de déviation, le point de référence est le contact du bord externe du disque déviateur entrant en prise avec la surface qui est évaluée et définit la déviation du point de référence par rapport à la surface de référence, le moyen de calibrage ayant une première partie (39) sur le disque déviateur et une deuxième partie (40) sur le corps de dispositif et une échelle de mesure de distance formant au moins la première partie (39) ou la deuxième partie (40) du moyen de calibrage et étalonnée de telle sorte que, quand le disque déviateur tourne de façon excentrée, l'échelle identifie une déviation du point de référence par rapport à l'axe de référence,
    le dispositif étant configuré de telle sorte que l'utilisateur maintenant le corps de dispositif peut effectuer un mouvement du dispositif d'ajustement formé par la liaison du dispositif de mesure de déviation au corps de dispositif sans manipuler le dispositif d'ajustement ou le dispositif de mesure de déviation en faisant dépasser le disque déviateur du corps de dispositif de telle sorte que le point de référence du disque déviateur peut entrer en prise avec une surface qui est évaluée et ajuster le dépassement du disque déviateur en appuyant encore le disque déviateur contre la surface qui est évaluée jusqu'à ce que l'indicateur indique un alignement de la surface de référence avec l'axe de référence et en effectuant la mesure sur le moyen de calibrage dans la même action.

2. Dispositif de mesure d'une déviation par rapport à un axe de référence selon la revendication 1 dans lequel l'indicateur (31) sur le corps de dispositif servant à indiquer un alignement de la surface de référence avec l'axe de référence comporte un deuxième indicateur de niveau à bulle (101) s'étendant à travers le dispositif et orthogonalement à l'axe longitudinal.

3. Dispositif de mesure d'une déviation par rapport à un axe de référence selon la revendication 1 dans lequel la liaison du dispositif d'ajustement est configurée pour permettre un mouvement relatif linéaire du disque déviateur par rapport au corps de dispositif.

4. Dispositif de mesure d'une déviation par rapport à un axe de référence selon la revendication 1 dans lequel le dispositif d'ajustement est configuré pour permettre un mouvement relatif courbe du disque déviateur par rapport au corps de dispositif.

5. Dispositif de mesure d'une déviation d'une surface qui est évaluée par rapport à un axe de référence selon la revendication 1 dans lequel :

l'indicateur comporte un indicateur de niveau à bulle (103) aligné avec l'axe longitudinal ;
une fenêtre de visualisation (153) sur une surface opposée à la surface de référence est disposée à un angle par rapport à l'indicateur pour permettre à l'utilisateur de voir l'indicateur depuis différents angles par rapport à l'angle de vue habituel.

6. Dispositif de mesure d'une déviation d'une surface qui est évaluée par rapport à un axe de référence selon la revendication 5, dans lequel la fenêtre de visualisation (153) comporte un réflecteur (154) permettant de voir l'indicateur depuis un premier angle jusqu'à un deuxième angle.

7. Dispositif de mesure d'une déviation d'une surface qui est évaluée par rapport à un axe de référence selon la revendication 5, dans lequel la fenêtre de visualisation s'étend à l'intérieur du corps de dispositif et est située au-dessus ou au-dessous du niveau de l'indicateur de telle sorte qu'un regard à travers la fenêtre permet de voir l'indicateur.

8. Dispositif de mesure d'une déviation d'une surface qui est évaluée par rapport à un axe de référence selon la revendication 5, dans lequel la fenêtre de visualisation comporte un canal interne jusqu'à l'indicateur.

Fig.1

**Fig.2**

**Fig.3**

**Fig.4**

37

40                                        40a

Fixing to level is with double sided tape
For permanent fixing use 2 x C/S self tapers supplied

115

33

39

113

38

113a

114 Imperial        114 Metric
      Version               Version

**Fig.5**

115

115

115

LEVIMATE

37

**Fig.6**

Fig.7

**Fig.8**

Fig.9

Fig.10a

Fig.10b

Fig.10c

Fig.10d

Fig.11a                    Fig.11b

FIG. 12a

FIG. 12b

Fig.13a

Fig.13b

Fig.13c

Fig.13d

Fig.13e

Fig.13f

Fig.13g

138

33

32

25

**Fig.14a**

141

138

39

51

**Fig.14b**

102

101

**Fig.14c**

**Fig.14d**

**Fig.15a**

**Fig.15b**